# EUROPEAN PATENT SPECIFICATION

(11) **EP 0 505 537 B1**
(45) Date of publication and mention of the grant of the patent: **18.10.1995**
(21) Application number: 91917595.0
(22) Date of filing: 20.08.1991
(51) Int. Cl.: B23Q 11/10, B23B 27/10

(54) **TOOL HOLDER WITH A PASSAGE FOR COOLANT**
WERKZEUGHALTER MIT KÜHLMITTELKANAL
PORTE-OUTIL POURVU D'UN PASSAGE POUR AGENT DE REFROIDISSEMENT

(30) Priority: 17.10.1990 SE 9003322
(43) Date of publication of application: 30.09.1992
(73) Proprietor: SANDVIK AKTIEBOLAG, 811 81 Sandviken (SE)
(72) Inventor: DANIELSEN, Jan, S-703 56 Örebro (SE)
(86) International application number: SE9100545
(87) International publication number: WO9206818

(56) References cited:
- EP-B- 0 483 267
- DE-C- 2 838 434
- SE-A- 3 128 893
- US-A- 3 250 542
- US-A- 3 388 917

## Description

The present invention relates to a tool holding device. This device is included in a processing machine and constitutes a holder for a machining tool such as a lathe shaft. The device is secured in the machine by a tool attachment which may either be permanet or be located on a unit containing several tool holders in order to enable several machining operations to be carried out one after the other. Frequently the machining tool must be rather long so that machining can be performed in the hollow interior of a workpiece. With long machining tools there is a considerable risk of the tool being subjected to vibration, thus resulting in a poorer quality of machining. Several attempts have been made to reduce the occurrence of vibration. The tool shaft has, for instance, been arranged in a cradle with several screw joints pressing the shaft against the cradle. The vibration was not reduced as desired and wear occurred at the mouth of the holder, giving rise to further vibration. The problem of vibration is troublesome as is evident, for instance, from Sandvik Coromant's publication entitled "Turning with dampened lathe shafts" HV-5300:008-SWE.

One method of reducing the undesired vibrations in the case of long machining tools is to replace mechanical attachment means by a hydraulic retention arrangement. This is achieved by providing a tool holder with an aperture to receive the shaft of the machining tool. Inside the wall of the aperture is a tubular space which can be filled with a medium such as oil or fat. If this medium is subject to pressure the walls of the aperture will be forced inwards, thereby clamping the shaft of the machining tool extremely firmly. The force achieved in this way exceeds any force which can be achieved by mechanical means. One example of such an arrangement is disclosed in US-A-3 388 917. Inner sleeves or bushings having the same outer diameter as the inner diameter of the aperture, but with different inner diameters can be inserted into the aperture, thereby enabling the tool holder to be used for machining tools of different thicknesses.

A suitable embodiment is a bushing provided with a through-hole and a tubular part. An annular space of the type described above is arranged in the bushing and inside the wall of the aperture. The sleeve is inserted into the holder aperture and medium in the annular space is then subjected to pressure so that the tool inserted is firmly clamped, as well as the outer wall of the sleeve being firmly clamped against the wall of the aperture.

The bushing described is usually provided with a peripheral ring or flange which is located at the outer end of the bushing and designed to be located outside the holder aperture. The flange includes means to influence the medium.

Problems arise in cooling the machining part of the machining tool. These are solved by arranging one or more nozzles for coolant within the area normally covered by a flange and located in the unit containing the holder aperture. The flange is so designed that parts thereof located opposite a nozzle have been removed. Suitable a sector-shaped part of the flange is removed. The remaining part preferably encompasses an angle of up to 300°.

Further characteristics of the present invention are revealed in the appended claims.

Known designs will be described in more detail with reference to the first three sheets of the accompanying drawings and the design according to the invention with reference to the fourth sheet, in which
- Figure 1: shows the end view of a prior art bushing intended for insertion into the aperture of a tool holder,
- Figure 2: shows the bushing of seen from the side,
- Figure 3: shows the bushing of Fig. 1 during insertion into a tool holder
- Figure 4: shows a tool holder together with a machining tool in operation according to prior art
- Figure 5: shows the bushing according to the invention, and
- Figure 6: shows the latter bushing together with a tool holder.

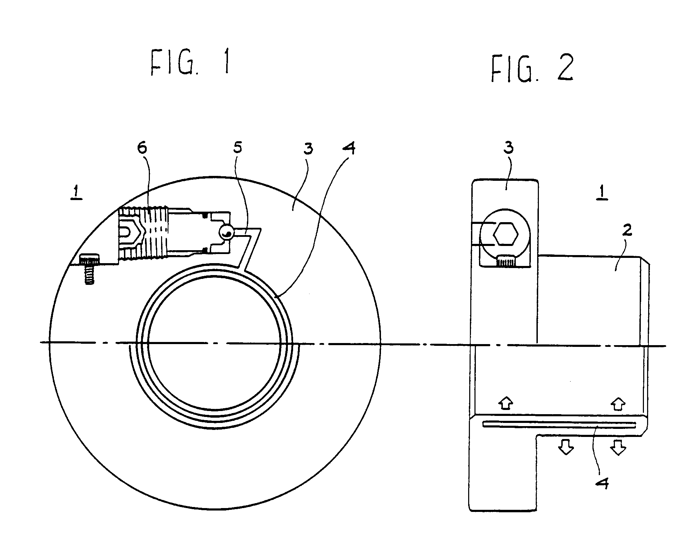

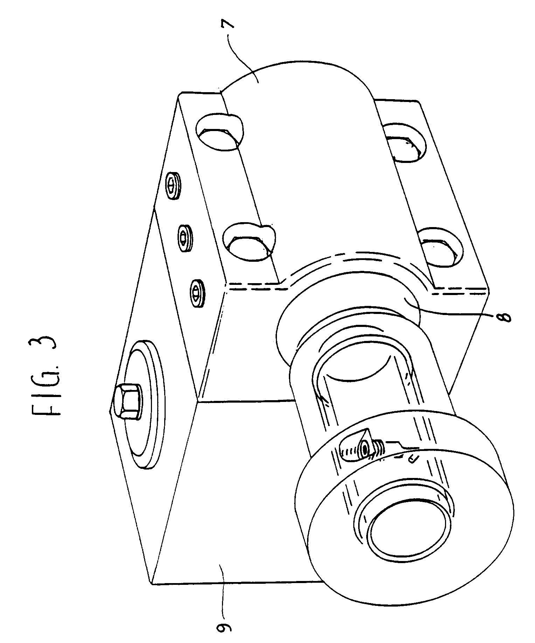

The prior art shown in Fig. 1 to 4 is disclosed in EP-B-483 267 (prior art falling within the terms of Article 54 (3) EPC).

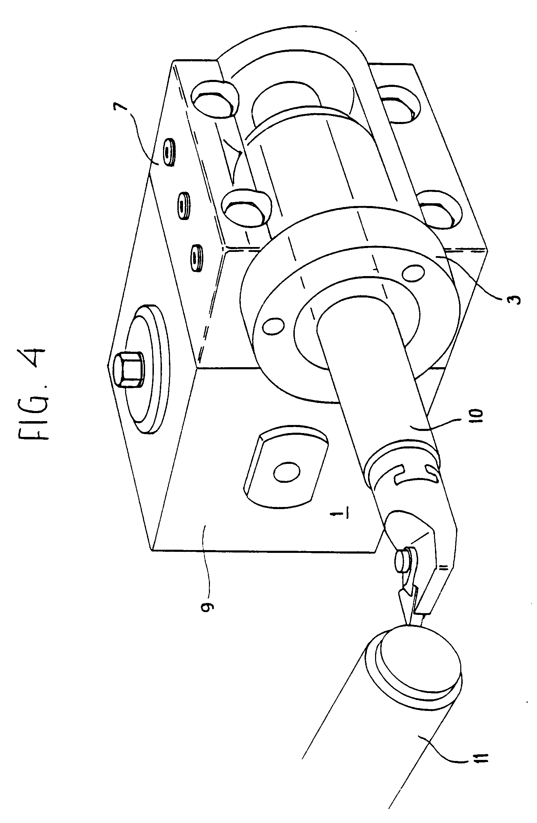

Figures 1 and 2 show a sleeve or bushing 1 with tubular part 2 and an annular end portion 3. Inside the sleeve is a space 4 which communicates with a conduit 5 for the supply of medium. The conduit 5 communicates with a means 6 for regulating the pressure of the medium inside the space 4. The pressure is regulated by a screw which can be tightened or loosened. The inner sleeve or bushing shown in Figures 1 and 2 is intended to be inserted in a tool holder 7 by way of the through-hole 8 in the holder 7. The tool holder is secured to a tool attachment 9 which may either be permanently secured or may be mounted on a movable member provided with several machining tools. In Figure 4 the inner sleeve or bushing is fully inserted into the tool holder 7. A lathe shaft 10 is also inserted into the aperture in the inner sleeve or bushing. The means 6 is now actuated, thereby subjecting the lathe shaft 10 to an inwardly directed pressure which may be in the order of 2000 bar. At the same time as the shaft is subjected to an inwardly directed pressure, the outer wall of the space 4 is also subjected to an outwardly directed pressure. A high clamping force is thus obtained in the tool holder itself. The front end of the shaft 10 is provided with a machining tool for maching a workpiece 11.

Another way to firmly clamp a machining tool is for each machining tool to be provided with a sleeve 2 having a peripheral space 4. Each tool may be provided with such a sleeve which is permanently built in. After insertion into the aperture 8 the medium in the space 4 of the built-in sleeve in the tool is subjected to pressure and the tool is thus firmly clamped in the tool holder 7.

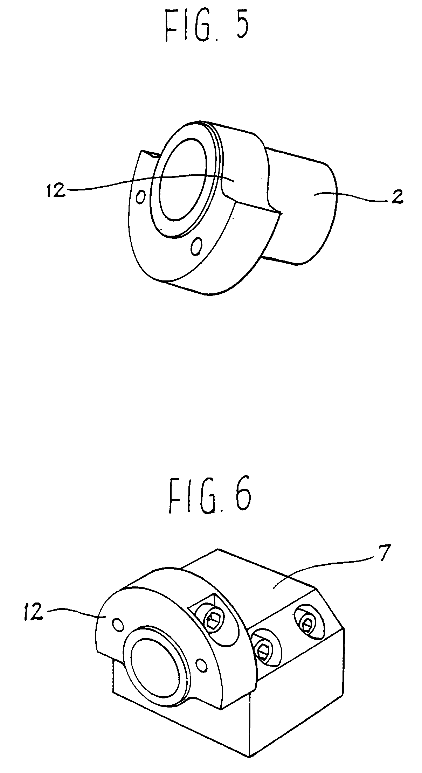

Figures 5 and 6 show a bushing 2 and 12 having a flange 12 in sector form. Below the flange 12 shown in Figure 6, in the front transverse wall of the tool holder 7, is/are one or more nozzles in the area which would have been covered by removed flange parts. The nozzles communicate with a pressure medium source and can be directed towards the tip of a lathe shaft 10.

The arrangement 6 may be directed either radially or tangentially in Figure 1 and also in the other figures.

## Claims

1. A tool holding device for elongate machining tools such as lathe shafts, consisting of a tool holder (7) and a tubular part (2) provided for receiving a tool or being part of a tool, the tool holder (7) having an aperture (8) to receive the tubular part (2), the tubular part (2) having a peripheral flange (12) and being provided outside its inner wall with a tubular space (4) for a pressure medium utilized to alter the inner diameter of the tubular part,
**characterized** in that a part of the peripheral flange (12) is omitted and that one or several preferably adjustable nozzles for a coolant is/are arranged at the end surface of the tool holder (7) at the part uncovered by said peripheral flange (12).

2. A tool holding device according to claim 1, wherein means (6) for regulating the pressure medium are arranged tangentially or radially within the flange.

3. A tool holding device according to claim 1,
**characterized** in that the omitted part of the peripheral flange (12) is substantially sector-shaped.

## Patentansprüche

1. Werkzeughaltevorrichtung für längliche Maschinenwerkzeuge, wie zum Beispiel Schäfte oder Wellen von Drehwerkzeugen, bestehend aus einem Werkzeughalter (7) und einem rohrförmigen Teil (2), welches für die Aufnahme eines Werkzeuges oder eines Teiles eines Werkzeuges vorgesehen ist, wobei der Werkzeughalter (7) eine Öffnung (8) hat, um den rohrförmigen Teil (2) aufzunehmen, der rohrförmige Teil (2) einen umlaufenden Flansch (12) hat und außerhalb seiner inneren Wand mit einem rohrförmigen Raum (4) für ein Druckmedium versehen ist, welches verwendet wird, um den inneren Durchmesser des rohrförmigen Teiles zu verändern, **dadurch gekennzeichnet**, daß ein Teil des umlaufenden Flansches (12) fortgelassen ist und daß eine oder mehrere, vorzugsweise einstellbare Düsen für ein Kühlmittel an der Stirnfläche des Werkzeughalters (7) an dem Teil angeordnet ist, der durch den umlaufenden Flansch (12) nicht bedeckt wird.

2. Werkzeughaltevorrichtung nach Anspruch 1, wobei eine Einrichtung (6) zum Regulieren des Druckmediums tangential oder radial innerhalb des Flansches angeordnet ist.

3. Werkzeughaltevorrichtung nach Anspruch 1, **dadurch gekennzeichnet**, daß der fortgelassene Teil des umlaufenden Flansches (12) im wesentlichen sektorförmig ist.

## Revendications

1. Dispositif de fixation d'outils pour machines-outils allongées, tels que des arbres de tour, constitué par un porte-outil (7) et une partie tubulaire (2) disposée de manière à recevoir un outil ou former une partie d'un outil, le porte-outil (7) ayant une ouverture (8) destinée à recevoir la partie tubulaire (2), la partie tubulaire (2) comportant une bride périphérique (12) et étant pourvue, à l'extérieur de sa paroi intérieure, d'un espace tubulaire (4) destiné à un agent de pressurisation utilisé pour modifier le diamètre intérieur de la partie tubulaire, caractérisé en ce qu'une partie de la bride périphérique (12) est échancrée, et en ce qu'une ou plusieurs buses, de préférence réglables, pour un produit réfrigérant, est/sont disposée(s) sur la surface d'extrémité du porte-outil (7), au niveau de la partie non recouverte par ladite bride périphérique (12).

2. Dispositif de fixation d'outils selon la revendication 1, caractérisé en ce que des moyens (6) de régulation de l'agent de pressurisation sont disposés tangentiellement ou radialement à l'intérieur de la bride.

3. Dispositif de fixation d'outils selon la revendication 1, caractérisé en ce que la partie échancrée de la bride périphérique (12) présente sensiblement une forme de secteur angulaire.
